# EUROPEAN PATENT SPECIFICATION

(11) **EP 3 351 078 B1**
(45) Date of publication and mention of the grant of the patent: **25.03.2020**
(21) Application number: 17001991.3
(22) Date of filing: 06.12.2017
(51) Int. Cl.: A01B 69/04, A01B 79/00, G05D 1/02

(54) **TRAVEL ROUTE GENERATION DEVICE**
VORRICHTUNG ZUM GENERIEREN EINES FAHRTWEGES
DISPOSITIF DE GÉNÉRATION D'UN ITINÉRAIRE

(30) Priority: 20.01.2017 JP 2017008338
(43) Date of publication of application: 25.07.2018
(73) Proprietor: Kubota Corporation, Osaka 556-8601 (JP)
(72) Inventor: Uoya, Yasuhisa, Hyogo, 6618567 (JP); Shimamoto, Izuru, Hyogo, 6618567 (JP); Tamatani, Kenji, Hyogo, 6618567 (JP); Suzukawa, Megumi, Hyogo, 6618567 (JP); Shinkai, Atsushi, Osaka, 5900823 (JP); Sakaguchi, Kazuo, Hyogo, 6618567 (JP)
(74) Representative: Müller-Boré & Partner Patentanwälte PartG mbB

(56) References cited:
- EP-A1- 3 104 245
- JP-A- H1 066 405
- JP-A- 2004 008 053
- JP-A- 2015 112 071

## Description

### [Technical Field]

The present invention relates to a travel route generation device that is configured to generate a travel route for automatic traveling of a field work vehicle.

### [Background Art]

It has been proposed that tilling work with a tractor and harvesting work with a combine are performed by automatic traveling. A shape of a field may vary, and it may be necessary to generate a travel route associated with a shape of the field in order to perform the automatic traveling.

JP H10-66405 A discloses a tractor that performs the tilling work in the field by the automatic traveling. The tilling work performed here includes turning work in which the work vehicle turns around a field peripheral area, and reciprocating straight work in which the work vehicle repeatedly performs straight work in a central area of the field (e.g. an inside area of the field peripheral area) while performing 180°-turning in the field peripheral area (may also be called a headland). At that time, the number of returning strokes from a start point to an end point of the reciprocating straight work and the number of turns from the start point to the end point of the turning work are determined based on a work condition including specifications of the work vehicle. It has also been proposed that the reciprocating straight work is previously performed and then the turning work is performed and that the start point of the turning work is set near a corner nearest to an entrance of the field.

The field work vehicle of JP 2015-112071 A includes a route calculation unit that calculates a travel route for the automatic traveling with topographic data of the field read from a field information storage as a basic condition. The route calculation unit obtains the shape of the field from the topographical data and calculates the travel route from the set traveling start point to the traveling end point. At that time, frequently a place for entering and leaving the field from the ridge or the farm road is determined in the field. Therefore, in JP 2015-112071 A, the traveling start point is defined by the entrance position of the field, and the traveling end point is defined by the exit position of the field. When the travel route is calculated by the route calculation unit, a position of an own vehicle is obtained based on the positioning data (e.g. latitude and longitude data) obtained from a global positioning system (GPS) module, and a driving support unit supports the driving of the field work vehicle such that a traveling vehicle travels accurately on the travel route.

JP 2004 008053 A discloses a work vehicle for the agriculture, on which the mobile station of a GPS unit, internal sensors, and a stock-following sensor are loaded. The work vehicle is characterized by an automatic travel-starting point (work vehicle-approaching point) and a work-starting point can be set at different places, respectively.

EP 3 104 245 A1 discloses a method for setting a path for an autonomous travel work vehicle to run and operate by determining positions with the use of a satellite positioning system so as to drive and carry out a field operation. The method includes inputting a front-to-back length of a vehicle body, a width of an implement and an overlapping amount of implements in a width direction, positioning a work vehicle at inflection points successively along an outer circumference of the field and determining positions with the use of the satellite positioning system, setting a work area, an operation start position and an operation end position, a direction for starting reference traveling, headlands on both ends of the work area, and a travel path within the field.

### [Summary of Invention]

### [Technical Problems]

Generally, the entrance through which the field work vehicle enters and leaves the field may be determined in each field. Generally, the field may be lowered from the surrounding farm roads or ridges, the traveling surface of the entrance may be inclined, and a width of the entrance may be narrow. A high steering technique may be required to pass through the entrance. Therefore, when the field work vehicle passes through the entrance, the automatic traveling may be difficult to perform, and the field work vehicle may rely on manual traveling. For this reason, even if a travel route covering the field is generated such that the entrance is set to the start point while the entrance is set to the end point, in a section between the entrance and a point where the field work vehicle can easily travel by the automatic traveling, in some circumstances, a driver gets on the field work vehicle and travels manually. That is, in such circumstances, the field work vehicle enters the field through the entrance by the manual traveling, and the driver leaves the field work vehicle at the point where the automatic traveling starts, and returns to the ridge on foot. Additionally, when the automatic traveling of a travel route portion in which the automatic traveling is easily performed is ended, the driver may walk to the field work vehicle, get on the field work vehicle, pass through the entrance by the manual traveling, and move the field work vehicle to the outside of the field. As is clear from JP H10-66405 A and JP 2015-112071 A, in the conventional technology, switching between manual operation and automatic operation is not considered, and moreover the walk of the driver in the field, which is generated in the switching, is not considered at all. When the switching between the manual operation and the automatic operation is performed at a position far away from the place where the driver stands by, the driver has to inconveniently walk long in the field.

An object of the present invention is to provide a travel route generation device that is configured to generate travel routes, taking into consideration the walk of the driver in the field required during the switching between the manual operation and the automatic operation.

### [Solutions to Problem]

According to an aspect, a travel route generation device is provided. The travel route generation device is configured to generate a travel route for automatic traveling of a field work vehicle. Further, the travel route generation device includes: a field data input unit via which a field data is input, the field data including a shape and an entrance of a field; a travel route generation unit to generate the travel route covering the field; a getting-off point determination unit to determine a getting-off point at which a driver gets off the field work vehicle in the travel route; a getting-on determination unit to determine a getting-on point at which the driver gets on the field work vehicle in the travel route; and a travel route division unit to define a travel route for manual traveling as a travel route portion between the entrance and the getting-off point in the travel route and a travel route portion between the getting-on point and the entrance in the travel route and to define a travel route for the automatic traveling as a travel route portion between the getting-off point and the getting-on point in the travel route.

According to the configuration, in the travel route that is generated so as to cover the field in consideration of the entrance, the getting-off position at which the driver gets off the field work vehicle and the getting-on position at which the driver gets on the field work vehicle can be properly determined, and the travel route for the manual operation and the travel route for the automatic operation can be defined based on the getting-off position and the getting-on position. Therefore, the transition place between the manual operation and the automatic operation where the driver gets on and off the field work vehicle can become a proper position, and the improper walk of the driver in the field can be avoided.
In some circumstances, the travel route generation device according to the above-stated aspect can generate a travel route that includes the part of manual operation as little as possible, thereby shortening the distance which the driver must walk. Further, in case the generated travel route includes the part of manual operation as little as possible, the generated travel route can include the part of automatic operation as much as possible. This may lead to improving efficiency of the work performed by the field work vehicle.

In an advantageous example of the present disclosure, based on an operation input by a user, the getting-off point determination unit may be configured to determine the getting-off point, and the getting-on point determination unit may be configured to determine the getting-on point. In the configuration, the driver can get on and off the field work vehicle at the desired position of the driver according to a characteristic of the field, a shape of the entrance, and specifications of the field work vehicle.

Preferably, in consideration of various conditions, the travel route for the manual operation and the travel route for the automatic operation may be automatically divided at an optimum position, and the driver may get on and off the field work vehicle at that position. Therefore, it can be avoided that the getting-off point and the getting-on point are determined at improper positions by carelessness of the driver. To this end, according to an advantageous example of the present disclosure, based on a selected getting-off point condition and a selected getting-on point condition, the getting-off point determination unit may be configured to automatically determine the getting-off point, and the getting-on point determination unit may be configured to automatically determine the getting-on point. At this point, examples of the getting-on point condition and the getting-off point condition preferably include proximity to an extended line of a slope of the entrance, proximity to a ridge near the entrance, and/or a driver's exit of the field work vehicle facing to the ridge. By satisfying such a condition or conditions, the walk from the field work vehicle to the ridge and the walk from the ridge to the field work vehicle can be proper for the driver and the field.

In an advantageous example of the present disclosure, the travel route generation unit may include a round route determination unit, a reference straight line determination unit, an inside route determination unit, and an entry and exit route determination unit, the round route determination unit may be configured to determine a round travel route for traveling around an outer peripheral area of the field, the reference straight line determination unit may be configured to determine a reference straight line, which extends in parallel with a reference side of the field and fills a central area located inside the outer peripheral area at predetermined intervals, the inside route determination unit may be configured to determine an inside travel route for traveling in the central area, the inside travel route including straight routes based on the reference straight line and a U-turn route connecting the straight routes, and the entry and exit route determination unit may be configured to determine an entry route between the entrance and the inside travel route and an exit route between the entrance and the round travel route. According to the configuration, the inside travel route located inside the previously-determined round travel route can be determined based on the reference straight line, and the traveling direction of the round travel route can be determined based on the passing direction of the entrance such that the work vehicle passes smoothly through the entrance from the round travel route and goes out of the field. This can avoid such turning of the work vehicle due to a large steering angle in the vicinity of the entrance of the work vehicle that devastates the worked ground.

In various embodiments and examples described herein, the "outer peripheral area" of the field may be understood as an area which extends from a circumference of the field towards the center of the field in a specified (e.g., predetermined or predeterminable) distance. The specified distance, in some examples, may be determined according to a width of the field work vehicle and/or a width of a work device of the field work vehicle. In some examples, the "outer peripheral area" of the field does not exceed 10 % of the field.

According to another aspect, a computer-implemented method is provided for generating a travel route for automatic traveling of a field work vehicle. The method may comprise:
inputting, via a field data input unit, a field data that includes a shape and an entrance of a field;
generating the travel route covering the field;
determining a getting-off point at which a driver gets off the field work vehicle in the travel route;
determining a getting-on point at which the driver gets on the field work vehicle in the travel route; and
defining a travel route for manual traveling as a travel route portion between the entrance and the getting-off point in the travel route and a travel route portion between the getting-on point and the entrance in the travel route and to define a travel route for the automatic traveling as a travel route portion between the getting-off point and the getting-on point in the travel route.

According to yet another aspect, a computer program product is provided, where the computer program product may comprise computer-readable instructions that, when loaded and run on a computer, cause the computer to perform the method according to the above-stated aspect.

The subject matter described in the application can be implemented as a method or as a system, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can also be implemented as a system including a processor, and a memory coupled to the processor. The memory may encode one or more programs to cause the processor to perform one or more of the methods described in the application. Further subject matter described in the application can be implemented using various machines.

### [Brief Description of Drawings]

Details of one or more implementations are set forth in the exemplary drawings and description below. Other features will be apparent from the description, the drawings, and from the claims. It should be understood, however, that even though embodiments are separately described, single features of different embodiments may be combined to further embodiments.
FIG. 1 is a schematic diagram illustrating an exemplary travel route indicating a position at which a driver may get on and off a field work vehicle in a field during switching between automatic traveling and manual traveling, and exemplary movement of the field work vehicle along the travel route.
FIG. 2 is a side view illustrating a tractor that is an example of the field work vehicle.
FIG. 3 is a functional block diagram illustrating an exemplary control functional unit functioning as a travel route generation device.
FIG. 4 is an explanatory diagram illustrating an example of a travel route generated by the travel route generation device.

### [Description of Embodiment]

In the following text, a detailed description of examples will be given with reference to the drawings. It should be understood that various modifications to the examples may be made. In particular, elements of one example may be combined and used in other examples to form new examples.

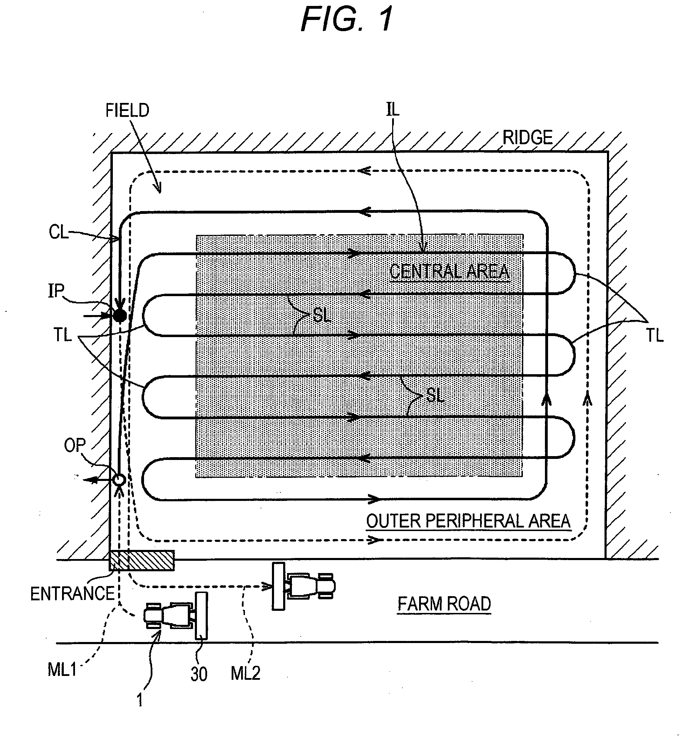

A travel route generation device according to an exemplary embodiment of the present invention will be described with reference to the drawings. In the exemplary embodiment, a field work vehicle is a tractor equipped with a work device 30 on a vehicle body 1, and works and travels along a travel route in a field. FIG. 1 illustrates an example of a travel route in which the tractor that may be stopped outside an entrance of the field enter the field through the entrance by manual traveling, switch to automatic traveling, work and travel in most of the field, and finally switch to the manual traveling again, manually travel a corner area that may be difficult to work by the automatic traveling, and go out the field through the entrance. In the example of FIG. 1, in the manual operation, the tractor may pass through the entrance from a farm road, and stop at a getting-off point (e.g. indicated by OP in FIG. 1) that may be set on a ridge near the entrance, and a driver may get off the tractor. From the getting-off point, the tractor may be switched to the automatic traveling, and start the work traveling along the set travel route. A getting-on point (e.g. indicated by IP in FIG. 1) may be set at a position of the travel route in which only the area adjacent to the outermost ridge is left, the tractor may stop at the getting-on point, and may be switched from the automatic traveling to the manual traveling. Because the getting-on point in the example shown in FIG. 1 is set at the ridge, the driver can get on the tractor from the ridge. In the area adjacent to the outermost ridge, the tractor may work by the manual traveling, and finally enter the farm road through the entrance. In the area adjacent to the outermost ridge, the tractor may also work by the automatic traveling, and travel only on the route passing through the entrance by the manual traveling. However, the entrance of the field may become a narrow slope and it may be difficult to perform the automatic traveling, and thus the manual traveling may be used.

The travel route in FIG. 1 may be frequently used in field work. The exemplary travel route is substantially constructed with an inside travel route including straight routes and a U-turn route connecting the straight routes, a round travel route going around an outer peripheral area of the filed, an entry route from the farm road to the field through the entrance, and an exit route from the field to the farm road through the entrance. Accordingly, the field may be divided into the outer peripheral area and a central area located inside the outer peripheral area, the inside travel route may be set to the central area, and the round travel route may be set to the outer peripheral area. The outer peripheral area may be understood as an area where a space required for the U-turn route is secured, and a width of the outer peripheral area may be determined based on a work width of the work vehicle and a minimum turning radius. A distance between the straight routes in the inside travel route may be the work width of the work vehicle, in particular, the work width in consideration of overlapping. In FIG. 1, the straight route is designated by the symbol SL, the U-turn route is designated by the symbol TL, the inside travel route is designated by the symbol IL, the round travel route is designated by the symbol CL, the entry route is designated by the symbol ML1, and the exit route is designated by the symbol ML2. The inside travel route including the straight route and the U-turn route may be a travel route suitable for the automatic traveling. In the actual field, the inside travel route may be most of the travel route covering the field.

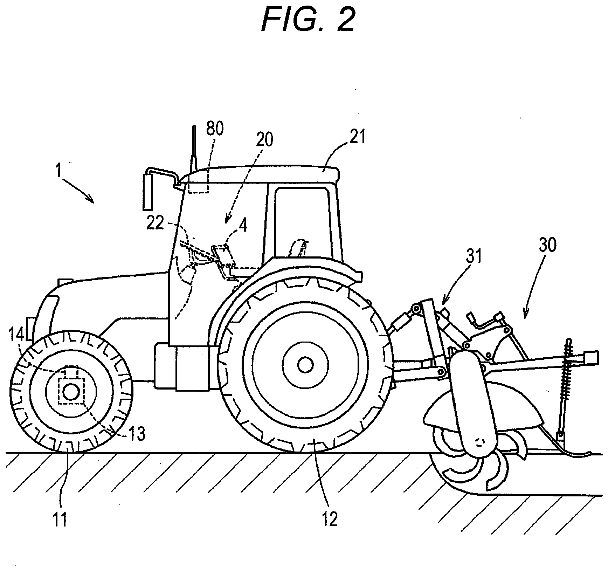

As illustrated in FIG. 2, the tractor may be provided with a driver's cab 20 in a central portion of the vehicle body 1 supported by front wheels 11 and rear wheels 12. At a rear of the vehicle body 1, the work device 30 that is, for example, a rotary tilling device may be mounted with a hydraulic lifting mechanism 31 interposed therebetween. The front wheels 11 may function as a steering control wheel, and the tractor may change a traveling direction when a steering angle of the steering control wheel is changed. The steering angle of the front wheel 11 may be changed by operation of a steering mechanism 13. The steering mechanism 13 may include a steering motor 14 for automatic steering. For the manual traveling, the front wheels 11 may be steered by operating a steering wheel 22 disposed on the driver's cab 20. The driver's cab 20 may be equipped with a general-purpose terminal 4 that is configured to receive a command from a user and provide information to the user. A cabin 21 of the tractor may be provided with a satellite positioning module 80. A satellite antenna for receiving a global navigation satellite system (GNSS) signal (including a GPS signal) may be attached at a ceiling area of the cabin 21 as a component of the satellite positioning module 80. The satellite positioning module 80 may include an inertial navigation module incorporated with a gyro acceleration sensor and a magnetic azimuth sensor in order to supplement satellite navigation. The inertial navigation module may also be provided in a location different from that of the satellite positioning module 80.

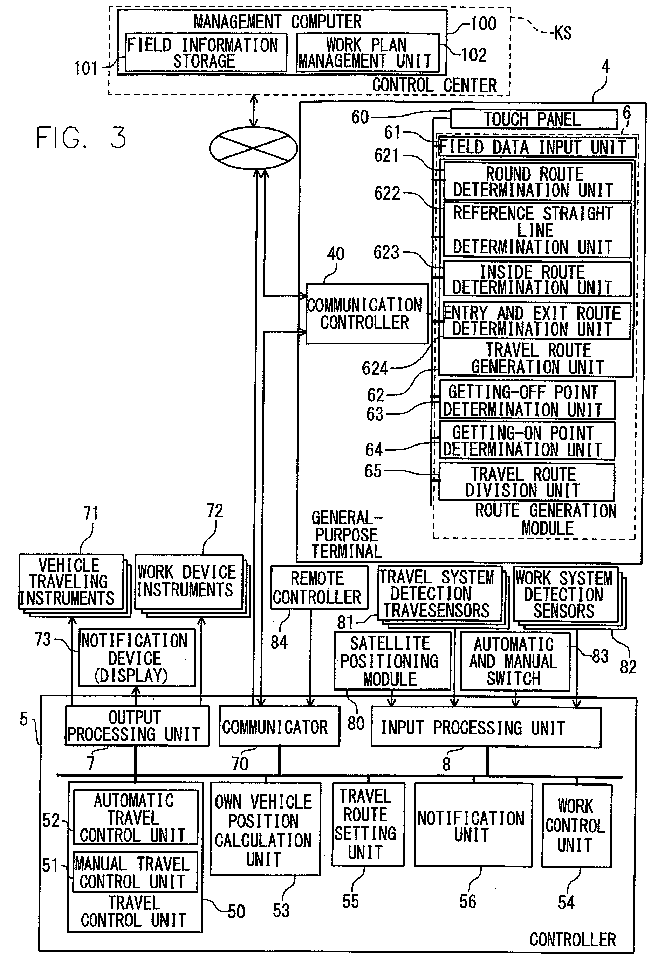

FIG. 3 illustrates an exemplary control system configured in the tractor. The control system of the exemplary embodiment may include a first controlling unit that may be implemented by the general-purpose terminal 4 including a graphical user interface, a controller 5 that is configured to control the vehicle body 1 of the tractor and the work device 30, and/or a remote controller 84 that is configured to wirelessly control traveling start and traveling end of the tractor from the outside. The travel route generation device of the present disclosure may be modularized as a route generation module 6, and incorporated in the general-purpose terminal 4.

In addition to the route generation module 6, the general-purpose terminal 4 may include various functions such as a communication controller 40 and/or a touch panel 60 in a general computer system. The general-purpose terminal 4 may be connected to the controller 5 such that data can be exchanged by an in-vehicle LAN, wireless communication, wired communication, or the like. Additionally, the general-purpose terminal 4 can exchange data with a management computer 100 constructed in a remote control center KS through a radio line and/or the Internet. When the general-purpose terminal 4 is constructed with a tablet computer, mobile phone, or the like and connected to a control system of the tractor such that data can be exchanged, the general-purpose terminal 4 can be used while brought out of the tractor.

In the exemplary embodiment, field information including a field position on a map and arrangement of farm roads surrounding the field may be stored in a field information storage 101 of the management computer 100, and the field information may be required to find the field to be worked. The management computer 100 may also include a work plan management unit 102 that is configured to manage a work plan describing contents of work in the designated field. The general-purpose terminal 4 can access the management computer 100, download the field information from the field information storage 101, and download the work plan from the work plan management unit 102. Alternatively, the general-purpose terminal 4 can input the field information and the work plan through a recording medium such as a USB memory.

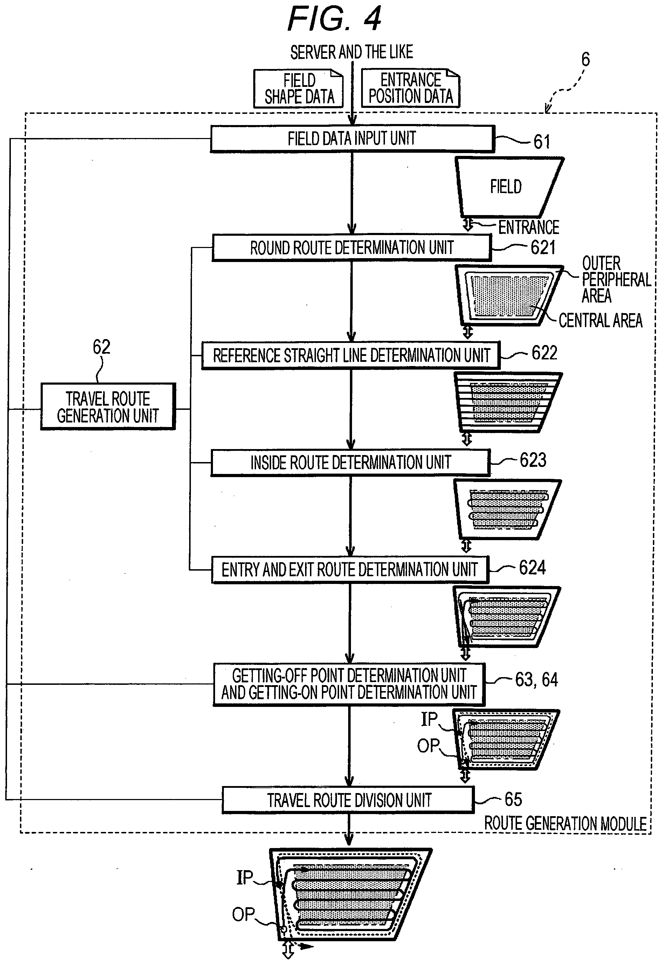

The route generation module 6 may include a field data input unit 61, a travel route generation unit 62, a getting-off point determination unit 63, a getting-on point determination unit 64, and a travel route division unit 65 as functional units that generate the travel route. In order to generate a basic travel route, the travel route generation unit 62 may include a round route determination unit 621, a reference straight line determination unit 622, an inside route determination unit 623, and/or an entry and exit route determination unit 624. A basic role of each functional unit of the route generation module 6 will be described with reference to a flow chart of travel route generation processing in FIG. 4.

The field data input unit 61 may input field shape data indicating a shape of the field to be worked and entrance position data indicating the position and shape of the entrance of the field, and develop the field shape data and the entrance position data in a working memory area. The round route determination unit 621 may determine a round travel route for traveling around the outer peripheral area of the field. Based on the work width (e.g., precisely, the work width in consideration of an overlapping width) and the proper turning radius of the tractor, the distance necessary for the U-turn may be calculated, and a round area in which the value of an integral multiple of the work width that can secure to the distance of the U-turn is set to the width may be determined as the outer peripheral area allocated to the round travel route. When the outer peripheral area is determined, a number of turns of the round travel route may be determined. In a general tilling work, an area corresponding to a 2-lap to 3-lap round travel route may be set to the outer peripheral area. As illustrated in FIG. 1, the area inside the outer peripheral area may be considered as constituting the central area.

The reference straight line determination unit 622 may determine a reference straight line that extends in parallel with a reference side of the field and fills the central area at predetermined intervals. The reference straight line may be the base of the travel route in the central area. The determination of the reference straight line may be pre-processing of generating the inside travel route. At that time, generally a longest side of an approximate polygon generated by the shape of the field may be adopted as the reference side of the field. In the example of FIG. 4, the longest side of a trapezoidal (e.g. quadrangular) shape may be selected as the reference side, and the reference straight line that fills the central area with the work width may be set in parallel with the reference side. The inside route determination unit 623 may set the reference straight line in the central area to the straight route, and connect each straight route with the U-turn route to generate the continuous inside travel route.

Then, the entry and exit route determination unit 624 may determine the entry route, which enters from the farm road to the field through the entrance and connects with the inside travel route, and the exit route, which connects with the round travel route and exits to the farm road from the field through the entrance. For the tilling work, generally the tractor may work and travel along the inside travel route, then work and travel along the round travel route, and exit directly from the field through the entrance. Accordingly, the entry route may be determined so as to extend along a passing direction of the entrance to connect smoothly with an end point of the inside travel route, and the exit route may be determined so as to extend along the passing direction of the entrance to connect smoothly with the round travel route. The travel route generation unit 62 may sequentially connect the entry route, the inside travel route, the round travel route, and the exit route, which may be determined in this way, thereby generating a basic travel route for the tractor to travel in the field.

In the basic travel route generated by the travel route generation unit 62, preferably in a route portion entering the outer peripheral area through the entrance of the entry route, the getting-off point determination unit 63 may determine a position suitable for a predetermined getting-off point condition as the getting-off point. The driver who gets on the tractor at the farm road may cause the tractor to enter the outer peripheral area along the entry route, stop the tractor at the getting-off point, switch from the manual operation to the automatic operation, and get off the tractor. Then, the automatic operation may be started using the remote controller 84.

In the basic travel route generated by the travel route generation unit 62, preferably in a route portion in the outer peripheral area separated from the entrance of the exit route, the getting-on point determination unit 64 may determine a position suitable for a predetermined getting-on point condition as the getting-on point. The tractor may stop at the getting-on position. The driver who gets on the stopped tractor may manually drive the tractor along the exit route, pass through the entrance, and cause the tractor to travel to the farm road. In the example of FIG. 1, although the round travel route for one round is included in the exit route, a short exit route that passes only through the entrance may be selected.

Examples of the getting-off point condition and the getting-on point condition for determining the getting-off point and the getting-on point may include, but are not limited to, proximity to the extension line of an entrance slope, proximity to the ridge in the vicinity of the entrance, and/or facing of a driver's exit of the field work vehicle to the ridge. Basically, the getting-off point condition and the getting-on point condition may be set such that the driver walks easily from the field work vehicle to the ridge and/or from the ridge to the field work vehicle. The getting-off point condition and the getting-on point condition may be common, and/or the getting-off point and the getting-on point may be set to a common point.

The getting-off point determination unit 63 and the getting-on point determination unit 64 can also determine the getting-off point and the getting-on point based on the operation input by the user instead of automatically determining the getting-off point and the getting-on point according to a predetermined condition and an algorithm. The operation input by the user may be achieved by designating the getting-off point and the getting-on point with respect to the entry route, the exit route, and/or the round travel route, which may be displayed on the touch panel 60.

Additionally, the travel route division unit 65 may define a travel route portion between the getting-off point and the getting-on point on the travel route as the automatic travel route (e.g. travel route for automatic traveling), and define a travel route portion between the entrance and the getting-off point in the travel route and a travel route portion between the getting-on point and the entrance as the manual travel route (e.g. travel route for manual traveling). In other words, the travel route division unit 65 may divide the basic travel route generated by the travel route generation unit 62 into the manual travel route and the automatic travel route based on the getting-off point and the getting-on point, generate the final travel route, and provide the final travel route to the controller 5.

As illustrated in FIG. 3, the controller 5 that may be considered as a core element of the tractor control system may include an output processing unit 7, an input processing unit 8, and/or a communicator 70, which function as input and/or output interfaces. The output processing unit 7 may be connected to vehicle traveling instruments 71, work device instruments 72 and/or a notification device 73, which may be incorporated in the tractor. The vehicle traveling instruments 71 may include, but are not limited to, a steering motor 14 and/or devices (not illustrated), such as a transmission mechanism and/or an engine unit, which may be controlled for the traveling of the vehicle. The work device instruments 72 may include, but are not limited to, a drive mechanism for the work device 30 and/or a lifting mechanism 31 that raises and lowers the work device 30. The notification device 73 may include a display, a lamp, and/or a speaker. The notification device 73 may be used to notify the driver and/or the supervisor of precaution information and/or warning information such as a travel precautions and/or a deviation from a target travel route when the work vehicle is automatically steered. The communicator 70 may have a function of sending data processed by the controller 5 to the management computer 100, and/or of receiving various kinds of data from the management computer 100. Additionally, the communicator 70 may input a remote control command from the remote controller 84.

The input processing unit 8 may be connected to a satellite positioning module 80, travel system detection sensors 81, work system detection sensors 82, and/or an automatic and manual switch 83. The travel system detection sensors 81 may include, but are not limited to, a sensor that detects a traveling state such as an engine speed and/or a transmission state. The work system detection sensors 82 may include, but are not limited to, a sensor that detects a position and/or an inclination of the work device 30 and/or a sensor that detects workloads. The automatic and manual switch 83 may be a switch that selects either an automatic travel mode for traveling with automatic steering or a manual travel mode for traveling with manual steering.

The controller 5 may also include a travel control unit 50, a work control unit 54, an own vehicle position calculation unit 53, a travel route setting unit 55, and/or a notification unit 56. The own vehicle position calculation unit 53 may calculate an own position based on the positioning data sent from the satellite positioning module 80. Since the tractor may be configured so as to be able to travel in both the automatic travel (e.g. automatic steering) mode and the manual travel (e.g. manual steering) mode, the travel control unit 50 that controls the vehicle traveling instruments 71 may include a manual travel control unit 51 and an automatic travel control unit 52. The manual travel control unit 51 may control the vehicle traveling instruments 71 based on the operation performed by the driver. The automatic travel control unit 52 may calculate an azimuth deviation and a positional deviation between the travel route set by the travel route setting unit 55 and the own vehicle position, and generate an automatic steering command.
The automatic steering command may be output to the steering motor 14 through the output processing unit 7. The automatic travel control unit 52 may stop the tractor based on a stop command from the remote controller 84 and start the traveling of the tractor based on a start command from the remote controller 84. In order to control the movement of the work device 30, the work control unit 54 may provide a control signal to the work device instruments 72. The notification unit 56 may generate a notification signal (e.g. display data and/or voice data) notifying a driver and/or a supervisor of necessary information, and provide the notification signal to the notification device 73 incorporated in an instrument panel.

The travel route setting unit 55 may receive the manual travel route (e.g. the travel route for the manual traveling) and the automatic travel route (e.g. the travel route for the automatic traveling) generated by the route generation module 6 from the general-purpose terminal 4 through the communicator 70, and set the manual travel route and the automatic travel route to the target travel route of the tractor.

### OTHER EXEMPLARY EMBODIMENTS

(1) The travel route on which the single field work vehicle works and travels in the field is generated in the above exemplary embodiment. A recently-proposed cooperative traveling control system in which work traveling is performed in a field using a plurality of field work vehicles capable of automatic traveling may include a master work vehicle that travels manually by a driver and at least one slave work vehicle that travels automatically without a person under the control of the master work vehicle. Before the work traveling is actually performed, in accordance with the manual traveling performed by the driver who gets on the slave work vehicle outside the field, the slave work vehicle may pass through the entrance and move to a proper position in the field. Then, the driver may get off the slave work vehicle and transfer to the master work vehicle. The slave work vehicle may be unmanned and perform the automatic traveling in cooperation with the manned master work vehicle. The slave work vehicle may stop at a proper position after the completion of the work traveling. The driver may again get on the slave work vehicle that is stopping, pass through the entrance in the manual traveling, and leave the field. During the switching between the manual traveling and the automatic traveling in the slave work vehicle, the driver can smoothly get on and off the slave work vehicle through the travel route generated by the travel route generation device of the present disclosure, and a burden on the driver may be reduced. In other words, the travel route generation device of the present disclosure can be favorably applied to a slave work vehicle in the cooperative traveling control system.
(2) Each functional unit in the functional block diagram of FIG. 3 is mainly separated for description purposes. Actually, each functional unit can be integrated with another functional unit, or divided into a plurality of sub-functional units. For example, the route generation module 6 may be constructed in the management computer 100, and the travel route generated by the management computer 100 may be downloaded to the controller 5 of the work vehicle. Alternatively, the route generation module 6 may be constructed in the controller 5 of the work vehicle.
(3) In the above exemplary embodiment, the longest side of the field indicated by the polygon is set to the reference side. Alternatively, a side designated by the user in the field indicated by the polygon may be set to the reference side. Alternatively, a virtual side (for example, an opposing side of a polygon or a side connecting adjacent sides) based on a side of a polygon can be used as a reference side.
(4) In the above exemplary embodiment, the travel route on which the work vehicle performs the work traveling is substantially constructed with the inside travel route including the straight routes and the U-turn route connecting the straight routes and the round travel route for traveling around the outer peripheral area of the field. Alternatively, a spiral travel route that travels spirally in the field or other travel routes may be adopted.
(5) In the above exemplary embodiment, the tractor equipped with the rotary tilling machine as the work device 30 is described as the work vehicle. However, in addition to the tractor, agricultural work vehicles such as a rice transplanter, a fertilizer distributor, and/or a combine may be adopted as the work vehicle.

### [Industrial Applicability]

The travel route generation device of the present invention can be applied to the field work vehicle that works in the field along the set travel route.

### [Reference Signs List]

4: general-purpose terminal
5: controller
50: travel control unit
51: manual travel control unit
52: automatic travel control unit
53: own vehicle position calculation unit
55: travel route setting unit
6: route generation module
61: field data input unit
62: travel route generation unit
621: round route determination unit
622: reference straight line determination unit
623: inside route determination unit
624: entry and exit route determination unit
63: getting-off point determination unit
64: getting-on point determination unit
65: travel route division unit
80: satellite positioning module

## Claims

1. A travel route generation device that is configured to generate a travel route for automatic traveling of a field work vehicle, the travel route generation device comprising:
a field data input unit (61) which is configured to input a field data , the field data including a shape and an entrance of a field;
a travel route generation unit (62) which is configured to generate the travel route covering the field;
a getting-off point determination unit (63) which is configured to determine a getting-off point at which a driver gets off the field work vehicle in the travel route; and
a getting-on determination unit (64) which is configured to determine a getting-on point at which the driver gets on the field work vehicle in the travel route; **characterized by** comprising
a travel route division unit (65) which is configured to define a travel route for manual traveling as a travel route portion between the entrance and the getting-off point in the travel route and a travel route portion between the getting-on point and the entrance in the travel route and to define a travel route for the automatic traveling as a travel route portion between the getting-off point and the getting-on point in the travel route.

2. The travel route generation device according to claim 1, wherein based on an operation input by a user, the getting-off point determination unit (63) is configured to determine the getting-off point, and the getting-on point determination unit (64) is configured to determine the getting-on point.

3. The travel route generation device according to claim 1, wherein based on a getting-off point condition and a getting-on point condition which are selected, the getting-off point determination unit (63) is configured to automatically determine the getting-off point, and the getting-on point determination unit (64) is configured to automatically determine the getting-on point.

4. The travel route generation device according to claim 3, wherein the getting-on point condition and the getting-off point condition include proximity to an extended line of a slope of the entrance, proximity to a ridge near the entrance, and/or a driver's exit of the field work vehicle facing to the ridge.

5. The travel route generation device according to any one of claims 1 to 4, wherein
the travel route generation unit (62) includes a round route determination unit (621), a reference straight line determination unit (622), an inside route determination unit (623), and an entry and exit route determination unit (624),
the round route determination unit (621) is configured to determine a round travel route for traveling around an outer peripheral area of the field,
the reference straight line determination unit (622) is configured to determine a reference straight line, which extends in parallel with a reference side of the field and fills a central area located inside the outer peripheral area at predetermined intervals,
the inside route determination unit (623) is configured to determine an inside travel route for traveling in the central area, the inside travel route including straight routes based on the reference straight line and a U-turn route connecting the straight routes, and
the entry and exit route determination unit (624) is configured to determine an entry route between the entrance and the inside travel route and an exit route between the entrance and the round travel route.

6. A computer-implemented method for generating a travel route for automatic traveling of a field work vehicle, the method comprising:
inputting, via a field data input unit (61), a field data that includes a shape and an entrance of a field;
generating the travel route covering the field;
determining a getting-off point at which a driver gets off the field work vehicle in the travel route; and
determining a getting-on point at which the driver gets on the field work vehicle in the travel route; **characterized by**
defining a travel route for manual traveling as a travel route portion between the entrance and the getting-off point in the travel route and a travel route portion between the getting-on point and the entrance in the travel route and to define a travel route for the automatic traveling as a travel route portion between the getting-off point and the getting-on point in the travel route.

7. A computer program product comprising computer-readable instructions that, when loaded and run on a computer, cause the computer to perform the method according to claim 6.

## Patentansprüche

1. Vorrichtung zum Generieren eines Fahrtweges, die ausgestaltet ist, einen Fahrtweg zum automatischen Fahren eines Feldarbeitsfahrzeugs zu generieren, wobei die Vorrichtung zum Generieren eines Fahrtweges umfasst:
eine Felddaten-Eingabeeinheit (61), die ausgestaltet ist, Felddaten einzugeben, wobei die Felddaten eine Form und eine Zufahrt eines Feldes umfassen;
eine Einheit (62) zum Generieren eines Fahrtweges, die ausgestaltet ist, den Fahrtweg zu generieren, der das Feld abdeckt;
eine Einheit (63) zum Bestimmen eines Aussteigpunkts, die ausgestaltet ist, einen Aussteigpunkt zu bestimmen, an dem der Fahrer aus dem Feldarbeitsfahrzeug auf dem Fahrtweg aussteigt; und
eine Einheit (64) zum Bestimmen eines Einstiegs, die ausgestaltet ist, einen Einsteigpunkt zu bestimmen, an dem der Fahrer in das Feldarbeitsfahrzeug auf dem Fahrtweg einsteigt; **dadurch gekennzeichnet, dass** sie umfasst:
eine Einheit (65) zum Unterteilen des Fahrtweges, die ausgestaltet ist, einen Fahrtweg zum manuellen Fahren als einen Fahrtwegabschnitt zwischen der Zufahrt und dem Aussteigpunkt auf dem Fahrtweg und einen Fahrtwegabschnitt zwischen dem Einsteigpunkt und der Zufahrt auf dem Fahrtweg zu definieren und einen Fahrtweg zum automatischen Fahren als einen Fahrtwegabschnitt zwischen dem Aussteigpunkt und dem Einsteigpunkt auf dem Fahrtweg zu definieren.

2. Vorrichtung zum Generieren eines Fahrtweges nach Anspruch 1, wobei die Einheit (63) zum Bestimmen des Aussteigpunkts ausgestaltet ist, basierend auf einer Betätigungseingabe von einem Benutzer den Aussteigpunkt zu bestimmen, und die Einheit (64) zum Bestimmen des Einsteigpunkts ausgestaltet ist, den Einsteigpunkt zu bestimmen.

3. Vorrichtung zum Generieren eines Fahrtweges nach Anspruch 1, wobei die Einheit (63) zum Bestimmen des Aussteigpunkts ausgestaltet ist, basierend auf einer Aussteigpunktbedingung und einer Einsteigpunktbedingung, die ausgewählt werden, den Aussteigpunkt automatisch zu bestimmen, und die Einheit (64) zum Bestimmen des Einsteigpunkts ausgestaltet ist, den Einsteigpunkt automatisch zu bestimmen.

4. Vorrichtung zum Generieren eines Fahrtweges nach Anspruch 3, wobei die Einsteigpunktbedingung und die Aussteigpunktbedingung die Nähe zu einer erweiterten Linie einer Böschung der Zufahrt, die Nähe zu einem Grat nahe bei der Zufahrt und/oder ein Aussteigen des Fahrers von dem Feldarbeitsfahrzeug dem Grat zugewandt umfasst.

5. Vorrichtung zum Generieren eines Fahrtweges nach einem der Ansprüche 1 bis 4, wobei
die Einheit (62) zum Generieren des Fahrtweges eine Einheit (621) zum Bestimmen eines Rundweges, eine Einheit (622) zum Bestimmen einer geraden Bezugslinie, eine Einheit (623) zum Bestimmen eines Innenweges und eine Einheit (624) zum Bestimmen eines Einfahrts- und Ausfahrtsweges umfasst,
die Einheit (621) zum Bestimmen eines Rundweges ausgestaltet ist, einen Rundfahrtweg zum Fahren um einen äußeren Umfangsbereich des Feldes zu bestimmen,
die Einheit (622) zum Bestimmen einer geraden Bezugslinie ausgestaltet ist, eine gerade Bezugslinie zu bestimmen, die sich parallel zu einer Bezugsseite des Feldes erstreckt und einen zentralen Bereich, der sich innerhalb des äußeren Umfangsbereichs befindet, in vorbestimmten Intervallen füllt,
die Einheit (623) zum Bestimmen eines Innenweges ausgestaltet ist, einen Innenfahrtweg zum Fahren in dem zentralen Bereich zu bestimmen, wobei der Innenfahrtweg gerade Wege, die auf der geraden Bezugslinie basieren, und einen Kehrtwendenweg, der die geraden Wege verbindet, umfasst, und
die Einheit (624) zum Bestimmen eines Einfahrts- und Ausfahrtsweges ausgestaltet ist, einen Einfahrtsweg zwischen der Zufahrt und dem Innenfahrtweg und einen Ausfahrtsweg zwischen der Zufahrt und dem Rundfahrtweg zu bestimmen.

6. Computerimplementiertes Verfahren zum Generieren eines Fahrtweges zum automatischen Fahren eines Feldarbeitsfahrzeugs, wobei das Verfahren umfasst:
über eine Felddaten-Eingabeeinheit (61), Eingeben von Felddaten, die eine Form und eine Zufahrt eines Feldes umfassen;
Generieren des Fahrtweges, der das Feld abdeckt;
Bestimmen eines Aussteigpunkts, an dem ein Fahrer aus dem Feldarbeitsfahrzeug aussteigt, auf dem Fahrtweg; und
Bestimmen eines Einsteigpunkts, an dem der Fahrer in das Feldarbeitsfahrzeug einsteigt, auf dem Fahrtweg; **gekennzeichnet durch**
Definieren eines Fahrtweges zum manuellen Fahren als ein Fahrtwegabschnitt zwischen der Zufahrt und dem Aussteigpunkt auf dem Fahrtweg und eines Fahrtwegabschnitts zwischen dem Einsteigpunkt und der Zufahrt auf dem Fahrtweg und Definieren eines Fahrtweges zum automatischen Fahren als ein Fahrtwegabschnitt zwischen dem Aussteigpunkt und dem Einsteigpunkt auf dem Fahrtweg.

7. Computerprogrammprodukt, das maschinenlesbare Anweisungen umfasst, die, wenn sie in einen Computer geladen und darauf ausgeführt werden, bewirken, dass der Computer das Verfahren nach Anspruch 6 durchführt.

## Revendications

1. Dispositif de génération d'itinéraire qui est configuré pour générer un itinéraire pour un déplacement automatique d'un véhicule de travaux sur le terrain, le dispositif de génération d'itinéraire comportant :
une unité de saisie de données de terrain (61) qui est configurée pour saisir une donnée de terrain, la donnée de terrain incluant une forme et une entrée d'un terrain ;
une unité de génération d'itinéraire (62) qui est configurée pour générer l'itinéraire couvrant le terrain ;
une unité de détermination de point de descente (63) qui est configurée pour déterminer un point de descente au niveau duquel un conducteur descend du véhicule de travaux sur le terrain dans l'itinéraire ; et
une unité de détermination de montée (64) qui est configurée pour déterminer un point de montée au niveau duquel le conducteur monte dans le véhicule de travaux sur le terrain dans l'itinéraire ; **caractérisé en ce qu'**il comporte
une unité de division d'itinéraire (65) qui est configurée pour définir un itinéraire pour un déplacement manuel en tant que portion d'itinéraire entre l'entrée et le point de descente dans l'itinéraire et portion d'itinéraire entre le point de montée et l'entrée dans l'itinéraire et pour définir un itinéraire pour le déplacement automatique en tant que portion d'itinéraire entre le point de descente et le point de montée dans l'itinéraire.

2. Dispositif de génération d'itinéraire selon la revendication 1, dans lequel, sur la base d'une saisie d'opération par un utilisateur, l'unité de détermination de point de descente (63) est configurée pour déterminer le point de descente et l'unité de détermination de point de montée (64) est configurée pour déterminer le point de montée.

3. Dispositif de génération d'itinéraire selon la revendication 1, dans lequel, sur la base d'une condition de point de descente et d'une condition de point de montée qui sont sélectionnées, l'unité de détermination de point de descente (63) est configurée pour déterminer automatiquement le point de descente et l'unité de détermination de point de montée (64) est configurée pour déterminer automatiquement le point de montée.

4. Dispositif de génération d'itinéraire selon la revendication 3, dans lequel la condition de point de montée et la condition de point de descente incluent une proximité avec une ligne étendue d'une pente de l'entrée, une proximité avec une crête proche de l'entrée et/ou une sortie du véhicule de travaux sur le terrain face à la crête par le conducteur.

5. Dispositif de génération d'itinéraire selon l'une quelconque des revendications 1 à 4, dans lequel
l'unité de génération d'itinéraire (62) inclut une unité de détermination de route arrondie (621), une unité de détermination de ligne droite de référence (622), une unité de détermination de route intérieure (623) et une unité de détermination de route d'entrée et de sortie (624),
l'unité de détermination de route arrondie (621) est configurée pour déterminer un itinéraire arrondi pour un déplacement autour d'une zone périphérique extérieure du terrain,
l'unité de détermination de ligne droite de référence (622) est configurée pour déterminer une ligne droite de référence qui s'étend parallèlement à un côté de référence du terrain et remplit une zone centrale située à l'intérieur de la zone périphérique extérieure à des intervalles prédéfinis,
l'unité de détermination de route intérieure (623) est configurée pour déterminer un itinéraire intérieur pour un déplacement dans la zone centrale, l'itinéraire intérieur incluant des routes droites basées sur la ligne droite de référence et une route en demi-tour reliant les routes droites et
l'unité de détermination de route d'entrée et de sortie (624) est configurée pour déterminer une route d'entrée entre l'entrée et l'itinéraire intérieur et une route de sortie entre l'entrée et l'itinéraire arrondi.

6. Procédé mis en œuvre par ordinateur pour la génération d'un itinéraire pour un déplacement automatique d'un véhicule de travaux sur le terrain, le procédé comportant :
la saisie, via une unité de saisie de données de terrain (61), d'une donnée de terrain qui inclut une forme et une entrée d'un terrain ;
la génération de l'itinéraire couvrant le terrain ;
la détermination d'un point de descente au niveau duquel un conducteur descend du véhicule de travaux sur le terrain dans l'itinéraire ; et
la détermination d'un point de montée au niveau duquel le conducteur monte dans le véhicule de travaux sur le terrain dans l'itinéraire ; **caractérisé par**
la définition d'un itinéraire pour un déplacement manuel en tant que portion d'itinéraire entre l'entrée et le point de descente dans l'itinéraire et portion d'itinéraire entre le point de montée et l'entrée dans l'itinéraire et pour définir un itinéraire pour le déplacement automatique en tant que portion d'itinéraire entre le point de descente et le point de montée dans l'itinéraire.

7. Produit-programme d'ordinateur comportant des instructions lisibles par ordinateur qui, lorsqu'elles sont chargées et exécutées sur un ordinateur, amènent l'ordinateur à réaliser le procédé selon la revendication 6.
